Europäisches Patentamt

European Patent Office

Office européen des brevets

(11) Veröffentlichungsnummer: **0 208 901**
**B1**

(12) **EUROPÄISCHE PATENTSCHRIFT**

(45) Veröffentlichungstag der Patentschrift: **09.05.90**

(51) Int. Cl.⁵: **G 01 N 21/71**

(21) Anmeldenummer: **86107757.6**

(22) Anmeldetag: **06.06.86**

(54) **Vorrichtung zum Zerstäuben von Probenflüssigkeit für spektroskopische Zwecke.**

(30) Priorität: **15.06.85 DE 3521529**

(43) Veröffentlichungstag der Anmeldung:
**21.01.87 Patentblatt 87/04**

(45) Bekanntmachung des Hinweises auf die
Patenterteilung:
**09.05.90 Patentblatt 90/19**

(84) Benannte Vertragsstaaten:
**DE FR GB IT NL SE**

(56) Entgegenhaltungen:
**DE-A-2 144 642**
**DE-A-2 910 101**
**DE-A-3 026 155**

**L.R. SNYDER et al.: "Introduction to Modern
Liquid Chromatography", 2. Auflage, 1979,
Seiten 90-101, 113, 114, John Wiley & Sons,
New York, US**
**B. WELZ "Atomabsorptionsspektrometrie", 3.
Auflage, 1983, Seiten 38-43, 270, 271, Verlag
Chemie, Weinheim;**

(73) Patentinhaber: **Berndt, Harald, Dr.
Auf der Bokkenbredde 48
D-4600 Dortmund 41 (DE)**

(72) Erfinder: **Berndt, Harald, Dr.
Auf der Bokkenbredde 48
D-4600 Dortmund 41 (DE)**

(74) Vertreter: **Weisse, Jürgen, Dipl.-Phys. et al
Patentanwälte Dipl.-Phys. Jürgen Weisse Dipl.-
Chem. Dr. Rudolf Wolgast Bökenbusch 41
Postfach 11 03 86
D-5620 Velbert 11 Langenberg (DE)**

(56) References cited:
**APPLIED SPECTROSCOPY, Band 38, Nr. 3,
Mai/Juni 1984, Seiten 405-412, Baltimore,
Maryland, US; M.P. DOHERTY et al.: "Jet-impact
nebulization for sample introduction in
inductively coupled plasma spectrometry"**

## Beschreibung

Die Erfindung betrifft eine Vorrichtung zum Zerstäuben für spektroskopische Zwecke, enthaltend

(a) eine als gesonderte Baugruppe ausgebildete Pumpe und

(b) eine mit der Pumpe über Leitungsmittel verbundene Düse mit einem kleinsten Strömungsquerschnitt von weniger als $5 \cdot 10^{-9}$ m², wobei die zu zerstäubende Probenflüssigkeit von der Pumpe durch die Düse gepumpt wird.

Die zerstäubte Probenflüssigkeit kann dabei in die Mischkammer eines Brenners für die Atomabsorptions-Spektroskopie eingesprüht werden. Eine Vorrichtung dieser Art kann jedoch auch benutzt werden, um Probenflüssigkeit in das Plasma eines Plasmabrenners für die Plasmaemissions-Spektroskopie einzusprühen.

Für diese Zwecke ist man bemüht, ein möglichst fein verteiltes Aerosol zu erzeugen, also ein Aerosol bei welchem die gebildeten Tröpfchen überwiegend sehr klein sind. Größere Tröpfchen werden nicht oder nur unvollständig verdampft, so daß Probensubstanz für die Messung verloren geht. Außerdem wird durch Streuung, Reflexion und Brechung der Strahlung an den Tröpfchen der Rauschpegel erhöht.

Üblicherweise werden zum Zerstäuben der Probenflüssigkeit pneumatische Zerstäuber verwendet. Solche pneumatischen Zerstäuber enthalten eine Düse, aus welcher ein Druckgasstrom austritt. Koaxial in dieser Düse sitzt ein Rohr, über welches die Probenflüssigkeit zugeführt wird. Bei Eintritt der Probenflüssigkeit in den Druckgasstrom wird die Probenflüssigkeit infolge der Geschwindigkeitsunterschiede von Probenflüssigkeits- und Druckgasstrom zu Tröpfchen zerrissen. Bei solchen Zerstäubern wird nur ein relativ geringer Prozentsatz der Probenflüssigkeit zu hinreichend kleinen Tröpfchen zerstäubt. Um größere Tröpfchen von der Flamme oder dergleichen fernzuhalten, wird die Probenflüssigkeit zunächst in eine Zerstäubungskammer oder Mischkammer zerstäubt. In dieser schlagen sich die größeren Tröpfchen nieder, während nur die kleinen Tröpfchen zu der Flamme oder dem Plasma mitgerissen werden.

Bei üblichen pneumatischen Zerstäubern beträgt der Gasdurck zwei bis sechs bar. Höhere Gasdrücke und damit höhere Strömungsgeschwindigkeiten des Gasstromes führen der Flamme bzw. dem Plasma zu viel Gas zu. Es ergibt sich zwar eine feinere Zerstäubung. Das Aerosol wird jedoch sehr stark mit Luft bzw. Edelgas verdünnt. Das beeinträchtigt die Funktion der Flamme bzw. des Plasmas. Außerdem wird durch die Verdünnung des Aerosols die Empfindlichkeit herabgesetzt.

Durch die DE—PS 1 950 989 ist eine Vorrichtung zum Zerstäuben von Probenflüssigkeit für spektroskopische Zwecke bekannt, die mit einem üblichen pneumatischen Zerstäuber arbeitet. Es ist dort ein Kompressor vorgesehen, der mit dem Zerstäuber über eine Leitung verbunden ist. Der Kompressor erzeugt dort Druckluft, deren Druck durch einen Druckregler geregelt wird. Diese Druckluft tritt mit hoher Geschwindigkeit als ringförmiger Strom durch eine Zerstäuberdüse aus. Dabei wird infolge des erzeugten Unterdrucks Probenflüssigkeit aus einem Behälter angesaugt. Die Zerstäubung der Probenflüssigkeit erfolgt durch die hohe Strömungsgeschwindigkeit der die so angesaugte Probenflüssigkeit umgebenden Luft.

Es ist weiterhin bekannt (Zeitschrift "Industrie-Lackierbetrieb", 44 Jahrgang (1976) Nr. 6 Seiten 222—229), Lack mittels einer Spritzpistole zu zerstäuben, indem der Lack von einer Hochdruckpumpe durch eine Düse gepumpt wird.

Durch die DE—OS 30 10 350 ist ein Laminarbrenner für spektroskopische Zwecke bekannt, bei welchem eine flüssige Probe angesaugt und in eine Mischkammer zerstäubt, in der Mischkammer mit Oxidans und Brenngas gemischt und als Aerosol einem Brennerkopf zugeführt wird. Bei diesem Laminarbrenner ist zum Zerstäuben der Probe ein mechanischer Zerstäuber vorgesehen, bei welchem die Probenflüssigkeit durch eine Pumpe angesaugt, unter Druck gebracht und über eine Ventildüse vernebelt wird. Der Zerstäuber weist einen Zylinder mit einer Durchgangsbohrung auf, in welcher seitlich eine Probenansaugleitung mündet. In der Durchgangsbohrung ist ein Plungerkolben geführt, der auf einer Seite aus der Durchgangsbohrung herausragt. Auf der anderen Seite der Durchgangsbohrung sitzt eine Ventildüse. Die Ventildüse besteht aus einem Ventilkegel der unter dem Einfluß einer vorbelasteten Feder auf der Mündung der Durchgangsbohrung aufsitzt. Auf den Zylinder ist eine mit einer zentralen Düsenöffnung versehene Kappe aufgeschraubt, welche über den Ventilkegel greift. Durch eine Antriebsvorrichtung wird der Plungerkolben in schnelle hin- und hergehende Bewegung versetzt.

Bei einer anderen Ausführungsform der DE—OS 3010350 weist der Zerstäuber einen Zylinder mit einer gestuften Durchgangsbohrung auf, die an einem Ende des Zylinders einen erweiterten Teil und am anderen Ende einen Teil von geringerem Durchmesser besitzt, wobei zwischen den beiden Teilen eine Schulter gebildet ist. Eine Probenansaugleitung mündet in den Teil von geringerem Durchmesser in geringem Abstand von der Schulter. In diesem Teil der Durchgangsbohrung ist ein Plungerkolben geführt, der auf einer Seite aus der Durchgangsbohrung herausragt. Eine enge Austrittsdüse schließt den erweiterten Teil der Durchgangsbohrung ab. Auf der Schulter sitzt ein in Schließrichtung vorbelasteter Ventilkörper.

Auch hier kann der Plungerkolben durch eine Antriebsvorrichtung in schnelle hin- und hergehende Bewegung versetzt werden.

Die letztere Ausführung arbeitet wie folgt:

Bei dem Rückhub des Plungerkolbens wird Probenflüssigkeit über die Probenansaugleitung angesaugt. Dabei ist das von dem Ventikörper und der Schulter gebildete Ventil geschlossen. In dem erweiterten Teil der Durchgangsbohrung kann daher auch während des Ansaughubes des Plungerkolbens ein hoher Druck aufrechterhalten bleiden, der sich allmählich über die enge Austrittsdüse ausgleicht. Beim Vorwärtshub des Plungerkolbens wird die Mündung der Probenansaugleitung durch den Plungerkolben abgedeckt. Das zwischen dieser Mündung und dem Ventikörper eingeschlossene Probenvolumen wird durch den weiteren Hub des Plungerkolbens stark verdichtet, bis der Ventilkörper abhebt.

Es werden damit hohe Drücke erreicht.

Eine solche Anordnung hat den Vorteil, daß zur Zerstäubung der Probenflüssigkeit kein zusätzlicher Gasstrom erforderlich ist.

Bei dem bekannten Zerstäuber bilden Pumpe und Düse eine Baueinheit. Es muß also die Pumpe zusammen mit der Düse und dem Antrieb der Pumpe unmittelbar am Brenner montiert werden. Das bietet konstruktive Schwierigkeiten. Es ergibt sich weiterhin bei dem bekannten Zerstäuber eine schwer kontrollierbare Pulsation des eingesprühten Probenflüssigkeitsnebels, die, wie dort erläutert, durch die Mischkammer geglättet werden soll. Eine Pulsation der Strömungsgeschwindigkeit führt aber auch zu einer Pulsation der Tröpfchengrößen.

Durch die DE—A—2 144 642 ist eine Atomisierungsvorrichtung für die flammenlose Atomabsorptions-Spektroskopie bekannt, bei welcher die Probe durch einen durchgehenden Kanal eines beheizten Körpers geleitet wird, ohne dabei mit den Wänden dieses Kanals in Berührung zu kommen. Dabei wird die Probe beim Durchlaufen dieses Kanals durch Strahlungswärme so erhitzt, daß am Ende des Kanals, außerhalb des beheizten Körpers eine Atomwolke gebildet wird. Bei einer Ausführungsform der DE—A—2 144 642 wird Probenflüssigkeit von einer als gesonderte Baugruppe ausgebildeten Pumpe über eine Kapillare auf eine enge Austrittsöffnung gegeben, die einlaßseitig von dem Kanal angeordnet und in Längsrichtung des Kanals ausgerichtet ist. Die Austrittsöffnung hat einen Durchmesser von 0,025 mm, also einen Austrittsquerschnitt von etwa $5 \cdot 10^{-10}$ m². Die Pumpe liefert einen Druck von etwa 2 bar. Dadurch wird ein Strahl von Tröpfchen erzeugt, der längs der Achse des Kanals verläuft. Die Tröpfchen haben dabei einen Anfangsdurchmesser von etwa 50 µm, der sich auf dem Weg durch den Kanal infolge Verdampfung verringert.

Die Pumpe arbeitet hierbei mit einem relativ niedrigen Druck. Es treten dementsprechend auch Tröpfchen mit relativ großem Durchmesser auf. Das ist nach der Konzeption der DE—A—2 144 642 auch notwendig. Es soll ja dort ein Tröpfchenstrahl erzeugt werden, welcher die Wandung des Kanals nicht berührt. Das würde nicht erreicht, wenn die austretende Flüssigkeit beim Austritt etwa in einen extrem feinen Nebel zerrissen würde.

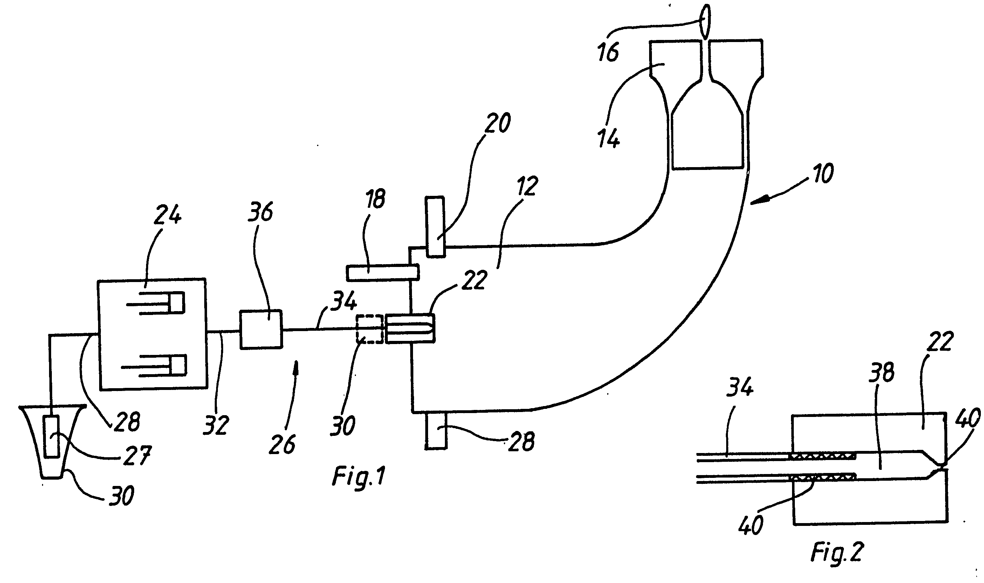

In einem Aufsatz "Jet-Impact Nebulization for Sampel Introduction in Inductively Coupled Plasma Spectrometry" von Doherty and Hieftje in "Applied Spectroscopy", Band 38 Nr. 3 (1984), insbesondere Fig. 2, ist ein Zerstäuber beschrieben, bei welchem ein Probengefäß mit einer Probenlösung in einem Druckbehälter angeordnet ist. Eine Schlauchleitung taucht in die Probenlösung ein und ist abdichtend aus dem Druckbehälter herausgeführt. Die Schlauchleitung ist zu einer Korunddüse mit einer Austrittsöffnung von 25 µm geführt. Der Austrittsquerschnitt ist auch hier etwa $5 \cdot 10^{-10}$ m². Der Druck in dem Druckbehälter, der die Probenlösung durch die Schlauchleitung und die Düse drückt, beträgt auch hier nur einige bar, ist also relativ gering. Dieser Druck reicht nicht aus, um die Probenlösung zu einem Aerosol zu zerreißen, wie es erforderlich ist. Es tritt vielmehr aus der Düse ein Probenstrahl aus. Dieser Probenstrahl trifft auf eine Prallplatte. Durch die Prallplatte wird der Strahl in das erforderliche Aerosol zerstäubt.

In dem Buch von Snyder und Kirkland "Introduction to Modern Liquid Chromatography" 2. Auflage (1979), John Wiley & Sons, New York, Seiten 90—101, 113, 114 sind Hochdruckpumpen beschrieben, die eine Probenflüssigkeit auf hohen Druck von mehr als 30 bar zu bringen vermögen. Dabei wird eine Trägerflüssigkeit mit diesem hohen Druck durch eine chromatographische Trennsäule gepumpt. Durch ein Umschaltventil kann eine die Probenflüssigkeit enthaltende Schleife in den Trägerflüssigkeitsstrom eingeschaltet werden, so daß die Probenflüssigkeit von dem Trägerflüssigkeitsstrom durch die Trennsäule transportiert wird. Dabei wandern die verschiedenen Bestandteile der Probenflüssigkeit infolge unterschiedlich starker Wechselwirkung mit der Trennsäule mit unterschiedlicher Geschwindigkeit durch die Trennsäule und erscheinen nacheinander an deren Ausgang.

Dies ist eine von der Atomabsorptions-Spektroskopie grundsätzlich verschiedene Technik. Es geht dort nicht um eine Zerstäubung einer Probenflüssigkeit zu einem feinen Aerosol.

Der Erfindung liegt die Aufgabe zugrunde, eine Vorrichtung zum Zerstäuben von Probenflüssigkeit für spektroskopische Zwecke zu schaffen, welche eine definierte Zerstäubung der Probenflüssigkeit mit einer hohen Ausbeute an sehr kleinen Tröpfchen ermöglicht und deren Anwendung bei Brennern, Plasmabrennern oder sonstigen Anregungs- und Atomisierungsvorrichtungen in der Spektroskopie ohne konstruktive Probleme möglich ist.

Erfindungsgemäß wird diese Aufgabe dadurch gelöst, daß

(c) die Pumpe eine Hochdruckpumpe zur Erzeugung eines Mindestdruckes von 30 bar ist.

Durch die Verwendung einer gesonderten Hochdruckpumpe braucht nur die Düse selbst an dem Brenner, Plasmabrenner oder dergleichen angebracht zu werden. Dadurch werden konstruktive Probleme vermieden, die sich bei der Anordnung nach der DE—OS 30 10 350 ergeben. Hochdruckpumpen sind handelsüblich z.B. als Hochdruckpumpen für die Hochdruck-Flüssigkeitschromatographie (HPLC) erhältlich. Sie liefern einen konstanten, nicht pulsierenden Druck. Dadurch bleibt auch die Tröpfchengröße, die von diesem Druck abhängt, konstant. Der hohe Druck und die kleine Düsenöffnung gewährleistet eine hohe Austrittsgeschwindigkeit und damit eine feine Zerstäubung der Probenflüssigkeit mit einem hohen Anteil an sehr kleinen Tröpfchen. Das so erhaltene Aerosol kann ohne weitere Maßnahmen in eine Flamme oder in das Plasma eines Plasmabrenners eingeleitet werden, im Gegensatz zu der DE—A—2 144 642, wo eine zusätzliche Beheizung vorgesehen ist, oder zu der oben diskutierten Veröffentilichung von Doherty und Hieftje, wo die eigentliche Aerosolbildung an einer Prallplatte stattfindet. Die Düse ist dabei jedoch so klein, daß bei dem hoher Druck auch kleine Probenmengen über eine ausreichend lange Meßzeit eingesprüht werden können.

Ausgestaltungen der Erfindung sind Gegenstand der abhängigen Ansprüche.

Einige Ausführungsbeispiele der Erfindung sind nachstehend unter Bezugnahme auf die zugehörigen Zeichnungen näher erläutert:

Fig. 1 ist eine schematische Darstellung eines Brenners mit einer Vorrichtung zum Zerstäuben von Probenflüssigkeit.

Fig. 2 zeigt die Düse bei der Ausführung von Fig. 1.

Fig. 3 zeigt eine Abwandlung der Ausführung von Fig. 1, mit welcher eine gepulste Zerstäubung möglich ist.

Fig. 4 zeigt einen Brenner mit einer Vorrichtung zum Zerstäuben von Probenflüssigkeit, bei welcher eine definierte Menge von Probenflüssigkeit in kurzer Zeigt mit sehr hohen Druck zerstäubt wird.

Fig. 5 zeigt eine Anordnung zur Einbringung von zerstäubter Probenflüssigkeit unmittelbar in einen Plasmabrenner.

Fig. 6 zeigt eine Einrichtung zum Einbringen von zerstäubter Probenflüssigkeit unmittelbar in einen Rohrofen, der entweder nach Art einer Graphitrohrküvette durch Hindurchleiten von elektrischem Strom oder durch eine Flamme auf hohe Temperatur gebracht wird, wobei ein Meßlichtbündel längs der Achse des Rohrofens durch diesen hindurchtritt.

Fig. 7 zeigt einen Schnitt durch eine vorzugsweise verwendete Hohlkegeldüse.

Fig. 8 zeigt eine Anordnung zur Einbringung von zerstäubter Probenflüssigkeit unmittelbar in einen Turbulenzbrenner.

Bei der Ausführungsform nach Fig. 1 ist mit 10 ein Brenner bezeichnet, der eine Mischkammer 12 und einen Brennerkopf 14 aufweist. Auf dem Brennerkopf 14 brennt eine Flamme 16. In die Mischkammer 12 wird über einen Anschluß 18 ein Brenngas, beispielsweise Acetylen, und über einen Anschluß 20 Luft zugeführt. Luft und Brenngas vermischen sich in der Mischkammer 12. In die Mischkammer 12 wird von einer Düse 22 ein Flüssigkeitsnebel eingesprüht. In der Mischkammer 12 niedergeschlagene Flüssigkent aus dem Flüssigkeitsnebel kann über einen Auslaß 23 ablaufen. Die über die Anschlüsse 18 und 20 zugeführten Gase transportieren den von der Düse 22 erzeugten Flüssigkeitsnebel in die Flamme.

Die Vorrichtung zum Zerstäuben von Probenflüssigkeit enthält eine Hochdruckpumpe 2 und die Düse 22. Hochdruckpumpe 24 und Düse 22 sind durch Leitungsmittel 26 miteinander verbunden. Die Hochdruckpumpe 24 ist eine Zweikolbenpumpe, wie sie für die Hochdruck-Flüssigkeitschromatographie handelsüblich erhältlich ist. Eine hierfür verwendbare Pumpe wird von der Firma LDC/Milton Roy in Riviera Beach, Florida 33404 USA, unter dem Warenzeichen "consta-Metric III" vertrieben. Eine solche Hochdruckpumpe liefert einen pulsfreien, stabilisierten Druck bei Flußraten von 0,1 bis 9,99 ml/min mit einer Flußratenstabilität von ±0,3%/Stunde und einem Maximaldruck von ca 410 bar (6.000 psi).

Due Pumpe 24 saugt Flüssigkeit aus einem Behälter 27 über ein dem Einlaß 28 der Pumpe 24 vorgeschaltetes Filter 30 an. Ein Auslaß 32 der Hochdruckpumpe 24 ist über die Leitungsmittel 26 mit der Düse 22 verbunden. Die Leitungsmittel 26 enthalten eine Hochdruckkapillare 34. Bei der in Fig. 1 dargestellten Ausführung enthalten die Leitungsmittel 26 zwischen dem Auslaß 32 der Hochdruckpumpe 24 und der Düse 22 eine mit einer Probenflüssigkeit füllbare Schleife sowie Umschaltventilmittel, durch welche die Schleife wahlweise in den Strömungsweg zwischen Hochdruckpumpe 24 und Düse einschaltbar ist. Diese Umschaltventilmittel mit Schleife sind in Fig. 1 durch den Block 36 dargestellt. Es kann sich dabei um Bauteile handeln, wie sie ebenfalls aus der Hochdruck-Flüssigkeitschromatographie bekannt sind. Beispiele für solche Ventile sind in der Firmendruckschrift "Das Chrompack Chromatographie-Handbuch Generalkatalog" der Firma Chrompack, 4330 AA Middelburg, Niederlande, Seiten 136—140 beschrieben.

Die Düse 22 ist in Fig. 2 vergrößert dargestellt.

Über die Hochdruckkapillare 34 gelangt die Flüssigkeit in den Innenraum 38 der Düse 22 und von dort zu einer engen Austrittsöffnung 40. Die Verbindung zwischen Hochdruckkapillare 34 und Düse 22 erfolgt durch einen üblichen Hochdruckanschluß 42, wie er beispielsweise ebenfalls aus der Hochdruck-Flüssigkeitschromatographie bekannt ist.

Die Hochdruckpumpe arbeitet mit einem Druck von mehr als 30 bar. Die Düse hat einen Durchmesser von weniger als 40 μm, d.h. der kleinste Strömungsquerschnitt der Düse ist weniger als $1,3 \cdot 10^{-9}$ m².

Die beschriebene Anordnung kann auf zwei Weisen betrieben werden:

Es kann in den Behälter 27 die Probe eingebracht werden. Die Ventilmittel 36 sind dann so geschaltet, daß eine durchgehende Verbindung zwischen dem Auslaß 32 der Hochdruckpumpe 24 und der Düse 22 hergestellt ist. Es wird dann von der Hochdruckpumpe 24 Probenflüssigkeit aus dem Behälter 27 über das Filter 30 und den Einlaß 28 angesaugt und kontinuierlich mit hohem Druck von mindestens 30 bar über den Auslaß 32 und

die Hochdruckkapillare 34 auf die Düse 22 gegeben. Hierdurch erfolgt eine feine Zerstäubung der Probe. Der so gebildete Nebel von Probenflüssigkeit wird durch die über die Anschlüsse 18 und 20 zugeführten Gase in den Brennerkopf 14 mitgenommen. Die feinen Tröpfchen werden in der Flamme 16 schnell verdampft und atomisiert. Es bildet sich so eine "Atomwolke" in der Flamme aus. Ein Meßlichtbündel, das von den Resonanzlinien eines gesuchten Elements gebildet wird, wird dementsprechend nach Maßgabe der Menge des gesuchten Elements in der Probe absorbiert. Es kann dadurch in bekannter Weise ein Meßwert für den Anteil des gesuchten Elements in der Probenflüssigkeit gewonnen werden.

Bei Ansaugung von Probenflüssigkeit durch die Hochdruckpumpe 24 aus dem Behälter 27 wird relativ viel Probenflüssigkeit verbraucht, da beispielsweise die Pumpenzylinder mit Probenflüssigkeit gefüllt werden müssen. So viel Probenflüssigkeit steht häufig nicht zur Verfügung. Ein weiteres Problem ist, daß Probenflüssigkeiten häufig aggressiv sind, so daß die Gefahr einer Beschädigung der Hochdruckpumpe 24 besteht. Schließlich ergibt sich die Gefahr einer Verschleppung bei aufeinanderfolgenden Messungen verschiedener Proben.

Diese Schwierigkeiten werden durch die Verwendung einer Schleife mit Umschaltventilmitteln 36 vermieden. Der Behälter 27 enthält dabei reines Lösungsmittel. Dieses Lösungsmittel wird von der Hochdruckpumpe 24 unter hohen Druck gesetzt. Die Probe wird in die Schleife eingefüllt, welche auf einen Umschaltbefehl hin von den Umschaltventilmitteln 36 in die Strömungsverbindung zwischen Hochdruckpumpe 24 und Düse 22 einschaltbar ist. Die Probenflüssigkeit wird dadurch indirekt, nämlich über das geförderte Lösungsmittel, auf den hohen Ausgangsdruck der Hochdruckpumpe 24 gebracht und von dem Lösungsmittel durch die Düse 22 gedrückt. Diese Anordnung hat den Vorteil, daß die Hochdruckpumpe 24 nur mit einem Lösungsmittel in Berührung kommt. Die Gefahr einer Verschleppung von Probe und die Gefahr einer Korrosion der Hochdruckpumpe 24 durch aggressive Proben wird dadurch vermieden. Korrosionsbeständig brauchen nur die Vorrichtung 36, die Hochdruckkapillare 34 und die Düse 22 ausgebildet zu sein. Die Schleife wie die Hochdruckkapillare 34 werden nach Durchsatz der Probe von dem nachfolgenden reinen Lösungsmittel gespült, so daß die Gefahr einer Verschleppung vermieden wird. Bei der letzteren Betriebsweise kann es vorteilhaft sein, ein Filter zwischen den Umschaltventilmitteln 36 und der Düse 22 anzuordnen. Ein solches Filter ist in Fig. 1 gestrichelt angedeutet und mit 31 bezeichnet.

Filter die hierfür verwendbar sind, sind auf Seite 118 des vorerwähnten Katalogs für Niederdruck wie Hochdruck dargestellt.

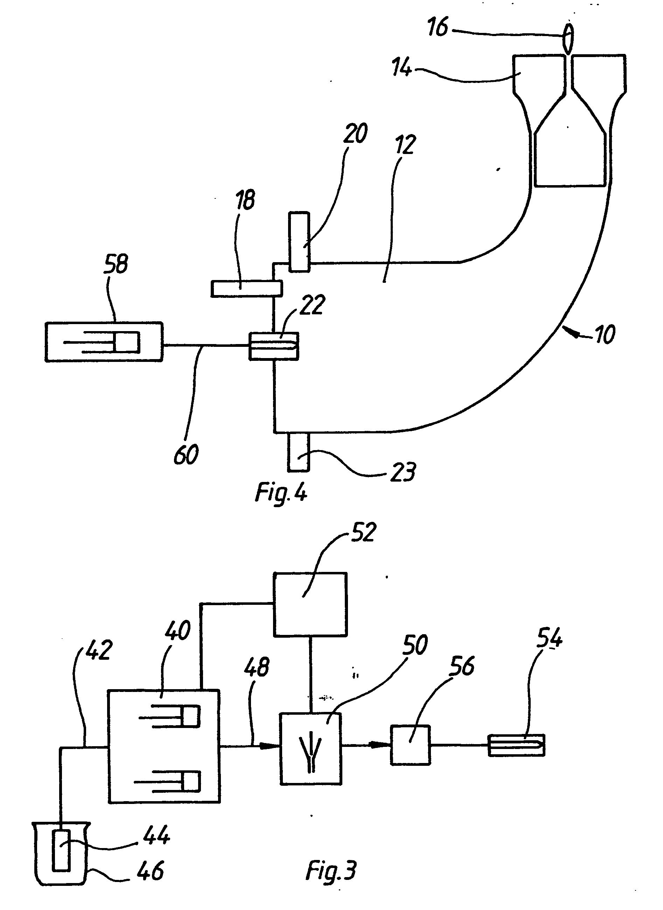

Bei der Ausführungsform nach Fig. 3 wird mit einer gepulsten Zerstäubung gearbeitet. Eine Hochdruckpumpe 40, die ähnlich wie die Pumpe 24 von Fig. 1 aufgebaut sein kann und zur Erzeugung eines kontinuierlichen Flüssigkeitsstroms mit konstantem Druck eingerichtet ist, saugt Flüssigkeit über einen Einlaß 42 und ein Filter 44 aus einem Behälter 46 an. Ein Auslaß 48 der Hochdruckpumpe 40 ist mit einem gesteuerten Ventil 50 verbunden. Dieses gesteuerte Ventil ist von einer elektronischen Steuervorrichtung 52 mit größer Spielswechselzahl (z.B. 10 bis 100/s) betätigbar, so daß der Flüssigkeitsstrom mit dieser Frequenz gepulst wird. Vorzugsweise ist das Ventil ein elektromagnetisches Nadelventil. Der so erzeugte Flüssigkeitsstrom wird auf die Düse 54 geleitet.

Diese Anordnung hat den Vorteil, daß bei einer vorgegebenen mittleren Flußrate, beispielsweise von 1 ml/min., bei gleichen Düsendurchmessern mit höheren Drücken gearbeitet werden kann. Eine Erhöhung des Druckes bei gleichem Düsendruchmesser zur Erzielung einer höheren Austrittsgeschwindigkeit der Probenflüssigkeit an der Düse und damit einer feineren Zerstäubung würde bei kontinuierlichem Druck zu einer entsprechenden Erhöung der Flußrate und damit einem schnellen Verbrauch der Probenflüssigkeit führen. Durch das Pulsen des Flüssigkeitsstromes kann der Druck erhöht werden, ohne daß die mittlere Flußrate einen vorgegebenen Wert über schreitet. Bei Verwendung einer Hochdruckpumpe 40 der vorliegenden Art steht jedoch nach Öffnen des Ventils 50 der volle Druck sofort an der Düse 54 an. Insofern unterscheidet sich die Anordnung nach Fig. 3 von einer Anordnung etwa nach der DE—OS 30 10 350, bei welcher die Pumpe einen pulsierenden Druck liefert und daher im Bereich niedriger Drücke größere Tröpfchen in dem Nebel von Probenflüssigkeit gebildet werden.

Die Anordnung nach Fig. 3 kann ebenso wie die Anordnung nach Fig. 1 auf zwei verschiedene Weisen gebraucht werden. Es kann unmittelbar Probenflüssigkeit aus dem Behälter 46 angesaugt werden. Es ist aber auch möglich, die Probe in einer Schleife einzubringen, die durch Umschaltventilmittel in den Strömungsweg zwischen Ventil 50 und Düse 54 eingeschaltet wird. Die Schleife und die Umschaltventilmittel sind in Fig. 3 wieder durch einen Block 56 dargestellt.

Die Reihenfolge des Ventils 50 und der Schleife und Umschaltventilmittel 56 kann auch vertauscht sein.

Die Hochdruckpumpe 40 kann mit der elektronischen Steuereinheit 52 zur Synchronisation verbunden sein.

Bei der Ausführungsform nach Fig. 4 ist die Hochdruckpumpe ein Hochdruckimpulserzeuger 58, durch den ein vorgegebenes Volumen im Mikroliterbereich (z.B. 50 µl) von Probenflüssigkeit in einem kurzen Zeitintervall durch die Düse 22 gepreßt wird. Der Hochdruckimpulserzeuger 58 ist durch Leitungsmittel 60 unmittelbar mit der Düse 22 verbunden. Die Düse 22 sitzt in der Wandung einer Mischkammer 12 eines Brenners 10, der in gleicher Weise wie der Brenner 10 von Fig. 1 aufgebaut ist. Entsprechende Teile haben in Fig. 1 und Fig. 4 die gleichen Bezugszeichen.

Ein Hochdruckimpulserzeuger, der für die vorliegenden Zwecke verwendbar ist, ist beschrieben in dem Aufsatz von K. Melcher "Ein Reibungsmodell zur Berechnung von instationären Strömungen in Rohrleitungen an Brennkraftmaschinen", Bosch Techn. Berichte, Band 4 (1979) Heft 7, Seite 273—290.

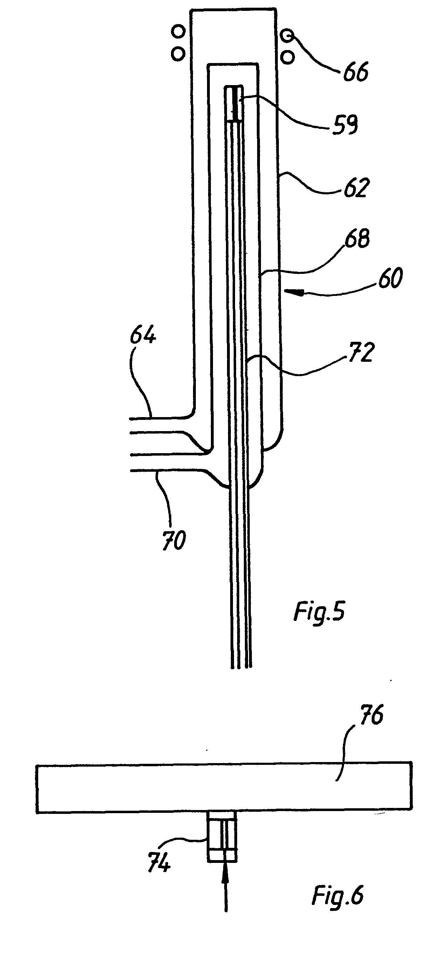

Bei der Ausführungsform nach Fig. 5 wird das Aerosol von einer Düse 59 unmittelbar in das Plasma eines Plasmabrenners 60 eingesprüht. Die Düse 59 ist zentral in dem Plasmabrenner 60 angeordnet. Der Plasmabrenner 60 weist ein an einem Ende offenes Außenrohr 62 auf, dem über einen Anschluß 64 ein zu ionisierendes Edelgas in Form von Argon zugeführt wird. Das Außenrohr 62 ist an seinem offenen Ende von einer Erregerspule 66 umgeben. Der Plasmabrenner 60 weist weiterhin ein zu dem Außenrohr 62 koaxiales Innenrohr 68 auf, das unterhalb der Erregerspule 66 endet. Durch das Innenrohr 68 wird über einen Anschluß 70 Edelgas, ebenfalls in Form von Argon, als Kühlmittel geleitet. Koaxial innerhalb des Innerohres 68 ist eine Kapillare 72 geführt, die nach Art der Fig. 1, 3 oder 4 mit einer (nicht dargestellten) Hochdruckpumpe verbunden ist und an ihrem Ende die Düse 59 trägt.

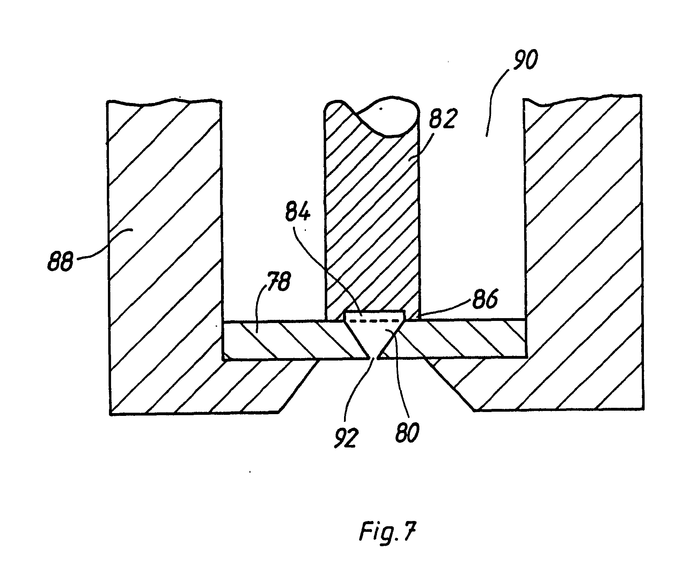

Bei der Ausführung nach Fig. 6 ist eine Düse 74 unmittelbar an einem Rohrofen 76 angebracht. Der Rohrofen 76 kann ein in der Flamme eines Brenners für die Atomabsorptions-Spektroskopie befindliches Quarzrohr sein. Er kann aber auch ein Rohr sein, das nach Art einer Graphitrohrküvette durch elektrische Widerstandsheizung erhitzt wird. Das Innere des Rohrofens bildet ein definiertes Absorptionsvolumen in der Atomabsorptions-Spektrometrie. Die Probenflüssigkeit unter hohen Drkck kann der Düse 74 auf irgendeine der in Fig. 1, 3 und 4 dargestellten Weisen zugeführt werden.

Fig. 7 zeigt eine vorteilhaft Konstruktion einer bei der beschriebenen Vorrichtung verwendeten Düse. Die Düse ist als sogenannte "Hohlkegeldüse" ausgebildet. Der Vorteil einer solchen Hohlkegeldüse besteht darin, daß die engste Stelle zur Erzeugung einer hohen Geschwindigkeit der zu zerstäubenden Flüssigkeit im Inneren der Düse liegt. Dadurch kann die eigentliche Zerstäubungsöffnung, z.B. die Austrittsöffnung zur Mischkammer 12 (Fig. 1) hin, relativ groß sein, z.B. einen Durchmesser von 100 μm haben.

In einem Plättchen 78 ist ein Hohlkegel 80 gebildet. Der Hohlkegel 80 ist nach oben hin durch einen Zylinder 82 verschlossen, der in seiner Stirnfläche eine Ausnehmung 84 besitzt. An einer Stelle des Zylinders 82 ist eine tangentiale Zulauföffnung 86 minimalen Durchmessers eingekerbt. Zur Verringerung des Durchtrittswiderstandes besitzt die Kerbung eine konische Form, d.h. sie ist an der Eintrittsstelle in den Hohlkegel 80 eng. beispielsweise mit einem Durchmesser von 20 μm, während sie an der Seite des Flüssigkeitseintritts groß ist, z.B. einen Durchmesser von 100 μm besitzt. Das Plättchen 78 wird von einem Gehäuse 88 gehalten. Der Zylinder 82 sorgt für den nötigen Andruck des Plattchens 78 an das Gehäuse 88. Die unter Hochdruck befindliche Flüssigkeit von der Pumpe 24 befindet sich in dem Raum 90 zwischen Zylinder 82 und Gehäuse 88, gelangt über die Zulauföffnung 86 in den Hohlkegel 80 und wird an einer Austrittsöffnung 92 zerstäubt.

Bei einem kontinuierlichen Flüssigkeitsdruck an der Düse wird mit einem Druck größer als 30 bar und einer Düsenöffnung mit kleinsten Strömungsquerschnitt von weniger als $1,3 \cdot 10^{-9}$ m² gearbeitet. Wenn die Flüssigkeit schlagartig unter Druck gesetzt wird, arbeitet man mit einem Druck von mehr als 150 bar und einem kleinsten Strömungsquerschnitt der Düse von weniger als $5 \cdot 10^{-9}$ m².

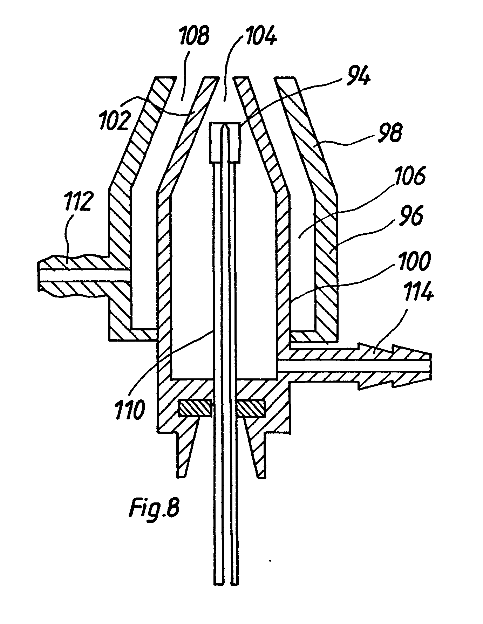

Fig. 8 zeigt eine Anordnung, bei welcher die von Probenflüssigkeit unter Hochdruck beaufschlagte Düse 94 zentral in einem sog. "Turbulenzbrenner" angeordnet ist. Ein solcher Turbulenzbrenner enthält einen Außenmantel 96 mit einem sich konisch verjüngenden oberen Ende 98. Koaxial zu dem Außen mantel 96 ist ein Innenmantel 100 ebenfalls mit einem sich konisch verjüngenden oberen Ende 102 angeordnet. Der Innenmantel 100 bildet oben eine enge Austrittsöffnung 104. Zwsichen Außenmantel 96 und Innenmantel 100 ist ein Ringraum 106 gebildet. Der Ringraum 106 endet in einem Ritzschlitz 108 zwischen den sich verjüngenden Enden 98 und 102. Koaxial in dem Innenmantel 100 sitzt eine Kapillare 110, die an ihrem Ende dicht unterhalb der Austrittsöffnung die Düse 94 trägt. Der Ringraum 106 ist über einen Anschluß 112 mit einer Brenngasquelle verbindbar. Das Innere des Innenmantels 100 ist über einen Anschluß 114 mit einer Quelle von Oxidans verbindbar.

Solche Turbulenzbrenner haben normalerweise den Nachteil, daß sehr viele große Tröpfchen in die Flamme gelangen. Dadurch ist die Verdampfung nur unvollständig, und der spektrale Untergrund wird erheblich vergrößert. Wird aber in einen solchen Turbulenzbrenner anstelle der herkömmlichen Ansaugkapillare eine druckfeste Kapillare 110 eingesetzt, die an ihrem oberen Ende die Düse 94 trägt, werden die wesentlichen Nachteile des Turbulenzbrenners überwunden. Es kommen die Vorteile zur Geltung, z.B. daß die Probe vollständig in die Flamme gelangt.

**Patentansprüche**

1. Vorrichtung zum Zerstäuben von Probenflüssigkeit für spektroskopische Zwecke, enthaltend
   (a) eine als gesonderte Baugruppe ausgebildete Pumpe (24, 40, 58) und
   (b) eine mit der Pumpe (24, 40, 58) über Leitungsmittel (26, 60) verbundene Düse (22, 54, 59, 74, 94) mit einem kleinsten Strömungsquerschnitt von weniger als $5 \cdot 10^{-9}$ m², wobei die zu zerstäubende Probenflüssigkeit von der Pumpe durch die Düse (22, 54, 59, 74, 94) gepumpt wird, dadurch gekennzeichnet, daß
   (c) die Pumpe (24, 40, 58) eine Hochdruckpumpe zur Erzeugung eines Mindestdruckes von 30 bar ist.

2. Vorrichtung nach Anspruch 1, dadurch gekennzeichnet, daß
   (a) die Hochdruckpumpe (24) eine kontinu-

EP 0 208 901 B1

ierlich fördernde Pumpe mit einem Einlaß (28) und einem Auslaß (32) ist, und

(b) die Düse (22) einen kleinsten Strömungsquerschnitt von weniger als $1{,}3 \cdot 10^{-9}$ m² aufweist.

3. Vorrichtung nach Anspruch 1, dadurch gekenneichnet, daß

(a) die Hochdruckpumpe (24) eine kontinuierlich fördernde Pumpe mit einem Einlaß (28) und einem Auslaß (32) ist,

(b) der Einlaß (28) der Hochdruckpumpe (24) mit einem Lösungsmittelvorrat (27) verbunden ist,

(c) die Leitungsmittel (26) zwischen dem Auslaß (32) der Hochdruckpumpe (24) und der Düse (22) eine mit einer Probenflüssigkeit füllbare Schleife sowie Umschaltventilmittel (36) enthalten, durch welche die Schleife wahlweise in den Strömungsweg zwischen Hochdruckpumpe (24) und Düse (22) einschaltbar ist.

4. Vorrichtung nach Anspruch 2 oder 3, dadurch gekennzeichnet, daß dem Einlaß (28) der Hochdruckpumpe (24) ein Filter (30) vorgeschaltet ist.

5. Vorrichtung nach Anspruch 2 oder 3, dadurch gekennzeichnet, daß der Düse (22) ein hochdruckseitig von der Hochdruckpumpe angeordnetes Filter (31) vorgeschaltet ist.

6. Vorrichtung nach Anspruch 2 oder 3, dadurch gekennzeichnet, daß die Hochdruckpumpe (24) eine Mehrkolbenpumpe ist.

7. Vorrichtung nach Anspruch 1, dadurch gekennzeichnet, daß

(a) die Hochdruckpumpe (58) ein Hochdruckimpulserzeuger ist, durch den ein vorgegebenes Volumen von Probenflüssigkeit in einem kurzen Zeitintervall durch die Düse gepreßt wird, und

(b) der Hochdruckimpulserzeuger für die kurzzeitige Erzeugung eines Druckes von wenigstens 150 bar ausgelegt ist.

8. Vorrichtung nach Anspruch 2, dadurch gekennzeichnet, daß zwischen der Hochdruckpumpe (40) und der Düse (54) gesteuerte Ventilmittel (50) vorgesehen sind, durch welche eine gepulste Zerstäubung hervorrufbar ist.

9. Vorrichtung nach Anspruch 1, dadurch gekennzeichnet, daß die Düse (59) zentral in einem Plasmabrenner (60) angeordnet ist.

10. Vorrichtung nach Anspruch 9, dadurch gekennzeichnet, daß

(a) der Plasmabrenner (60) ein an einem Ende offenes Außenrohr (62) aufweist, dem ein zu ionisierendes Gas zugeführt wird und das an seinem offenen Ende von einer Erregerspule (66) umgeben ist,

(b) der Plasmabrenner (60) weiterhin ein zu dem Außenrohr (62) koaxiales Innenrohr (68) aufweist, das unterhalb der Erregerspule (66) endet und durch welches ein weiteres Gas geleitet wird und

(c) koaxial innerhalb des Innenrohres (68) eine Kapillare (72) geführt ist, die mit der Hochdruckpumpe verbunden ist und an ihrem Ende die Düse (59) trägt.

11. Vorrichtung nach Anspruch 1, dadurch gekennzeichnet, daß das durch die Düse (74) erzeugte Aerosol in einen Rohrofen (76) eingeleitet wird.

12. Vorrichtung nach Anspruch 1, dadurch gekennzeichnet, daß die Düse eine Hohlkegeldüse ist.

13. Vorrichtung nach einem der Ansprüche 1 bis 3, dadurch gekennzeichnet, daß die Düse (94) zentral in einem Turbulenzbrenner angeordnet ist.

14. Vorrichtung nach Anspruch 13, dadurch gekennzeichnet, daß

(a) der Turbulenzbrenner einen Innenmantel (100) und einen Außenmantel (96) aufweist, wobei Oxidans und Brenngas durch die von Innen- und Außenmantel gebildeten zwischenräume koaxial geführt sind und eine Vermischung der Gase außerhalb des Turbulenzbrenners erfolgt, und

(b) im Inneren des Innenmantels eine Kapillare (110) geführt ist, welche an ihrem Ende die Düse (94) trägt.

**Revendications**

1. Dispositif déstiné à atomiser des liquides d'échantillon à des fins spectroscopiques, comprenant

(a) une pompe (24, 40, 58) formée comme composante séparée, et

(b) une tuyère (22, 54, 59, 74, 94) reliée à la pompe (24, 40, 58) par des moyens de conduite (26, 60) et ayant une coupe transversale d'écoulement le plus petit de moins de $5 \cdot 10^{-9}$ m², le liquide d'échantillon à atomiser étant pompé par la pompe par la tuyère (22, 54, 59, 74, 94), caractérisé par le fait que

(c) la pompe (24, 40, 58) est une pompe à haute pression déstinée à engendrer une pression minimum de 30 bar.

2. Dispositif selon la revendication 1 caractérisé par le fait que

(a) la pompe à haute pression (24) est une pompe refoulant continuellement avec une entrée (28) et une sortie (32), et

(b) la tuyère (22) a une coupe transversale d'écoulement la plus petite de moins de $1{,}3 \cdot 10^{-9}$.

3. Dispositif selon la revendication 1, caractérisé par le fait que

(a) la pompe à haute pression (24) est une pompe refoulant continuellement avec une entrée (28) et une sortie (32),

(b) l'entrée (28) de la pompe à haute pression (24) est reliée à un réservoir de solvant (27),

(c) les moyens de conduite (26) entre la pompe à haute pression (24) et la tuyère (22) comprennent une boucle remplissable d'un liquide d'échantillon ainsi que des moyens de renversement de soupape (36) par lesquels la boucle peut être connectée sélectivement dans la voie d'écoulement entre la pompe à haute pression (24) et la tuyère (22).

4. Dispositif selon la revendication 2 ou 3 caractérisé par le fait qu'un filtre (30) est couplé en amont de l'entrée (28) de la pompe à haute pression (24).

5. Dispositif selon la revendication 2 ou 3 caractérisé par le fait qu'un filtre (31) disposé sur le côté de la haute pression de la pompe à haute presion est connecté en amont de la tuyère.

6. Dispositif selon la revendication 2 ou 3 caractérisé par le fait que la pompe à haute pression (24) est une pompe à plusieurs pistons.

7. Dispositif selon la revendication 1 caractérisé par le fait que

(a) la pompe à haute pression (58) est un générateur d'impulsions à haute pression par lequel un volume prédéterminé de liquide d'échantillon est pressé pendant un court instant par la tuyère, et

(b) le générateur d'impulsions à haute pression est dimensionné pour la génération temporaire d'une pression d'au moins 150 bar.

8. Dispositif selon la revendication 2 caractérisé par le fait que des moyens de soupape (50) commandés entre la pompe à haute pression (40) et la tuyère (54) sont prévus, par lesquels une atomisation pulsée peut être provoquée.

9. Dispositif selon la revendication 1, caractérisé par le fait que la tuyère (59) est disposée centralement dans un brûleur de plasme (60).

10. Dispositif selon la revendication 9 caractérisé par le fait que

(a) le brûleur de plasme (60) a un tuyau extérieur (62) ouvert sur une extrémité (62) auquel un gaz à ioniser est amené et qui est entouré à son extrémité ouverte d'une bobine excitatrice (66),

(b) le brûleur de plasme (60) à, en outre, un tuyau intérieur (68) coaxial à la tuyère extérieure (62), qui termine au dessous de la bobine excitatrice (66) et par laquelle est passé un autre gaz, et

(c) un tube capillaire (72) est guidé coaxialement à l'intérieur du tuyau intérieur (68) relié à la pression à haute pression et supporte une tuyère (59) à son extrémité.

11. Dispositif selon la revendication 1, caractérisé par le fait que l'aérosol engendré par la tuyère (74) est introduit dans un four tubulaire (76).

12. Dispositif selon la revendication 1 caractérisé par le fait que la tuyère est une tuyère à cône creux.

13. Dispositif selon la revendication 1 à 3, caractérisé par le fait que la tuyère (94) est disposée centralement dans un brûleur à turbulence.

14. Dispositif selon la revendication 13, caractérisé par le fait que

(a) le brûleur à turbulence a une chemise intérieure (100) et une chemise extérieure (96), de l'agent oxydant et du gaz combustible étant guidé coaxialement par les espaces formés par la chemise intérieure et la chemise extérieure et les gaz étant melangés à l'extérieur du brûleur à turbulence, et

(b) un tube capillaire (110) est guidé à l'intérieur de la chemise intérieure et porte la tuyère (94) sur son extrémité.

**Claims**

1. Device for nebulizing sample liquid for spectroscopic purposes, comprising

(a) a pump (24, 40, 58) formed as a separate component and

(b) a nozzle (59, 74, 94) connected to the pump (24, 40, 58) through conduit means (26, 60) and having a smallest flow cross section of less than $5 \cdot 10^{-9}\,m^2$, the sample liquid to be nebulized being pumped through the nozzle (22, 54, 59, 74, 94) by the pump, characterized in that

(c) the pump (24, 40, 58) is a high-pressure pump for providing a minimum pressure of 30 bar.

2. Device as set forth in Claim 1, characterized in that

(a) the high-pressure pump (24) is a continuously feeding pump having an inlet (28) and an outlet (32), and

(b) the nozzle (22) has a smallest flow cross section of less than $1.3 \cdot 10^{-9}\,m^2$.

3. Device as set forth in Claim 1, characterized in that

(a) the high-pressure pump (24) is a continuously feeding pump having an inlet (28) and an outlet (32), and

(b) the inlet (28) of the high-pressure pump (24) is connected to a solvent reservoir (27),

(c) the conduit means (26) between the outlet (32) of the high-pressure pump (24) and the nozzle (22) comprise a loop adapted to be filled with a sample liquid and reversing valve means (36) which are arranged to optionally connect the loop into the flow path between the high-pressure pump (24) and nozzle (22).

4. Device as set forth in Claims 2 or 3, characterized in that a filter (30) is connected upstream of the inlet (28) of the high-pressure pump (24).

5. Device as set forth in Claims 2 or 3, characterized in that a filter (31) arranged on the high-pressure side of the high-pressure pump is connected upstream of the nozzle (22).

6. Device as set forth in Claims 2 or 3, characterized in that the high-pressure pump (24) is a multiple-piston pump.

7. Device as set forth in Claim 1, characterized in that

(a) the high-pressure pump (58) is a high-pressure pulse generator by which a predetermined volume of sample liquid is pressed through the nozzle in a short time interval, and

(b) the high-pressure pulse generator is designed for short-time generation of a pressure of at least 150 bar.

8. Device as set forth in Claim 2, characterized in that controlled valve means (50), arranged to cause a pulsed nebulization, are provided between the high-pressure pump (40) and the nozzle (54).

9. Device as set forth in Claim 1, characterized in that the nozzle (59) is arranged centrally in a plasma burner (60).

10. Device as set forth in Claim 9, characterized in that

(a) the plasma burner (60) has an outer tube (62) open at one end, to which a gas to be ionized is supplied and which is surrounded by an excitation coil (66) at its open end,

(b) furthermore, the plasma burner (60) has an inner tube (68) coaxial with the outer tube (62), which inner tube (68) ends below the excitation coil (66) and through which a further gas is guided, and

(c) a capillary tube (72) is guided coaxially within the inner tube (68), which capillary tube (72) is connected to the high-pressure pump and carries the nozzle (59) at its end.

11. Device as set forth in Claim 1, characterized in that the aerosol provided by the nozzle (74) is introduced into a tube oven (76).

12. Device as set forth in Claim 1, characterized in that the nozzle is a hollow cone nozzle.

13. Device as set forth in any one of the Claims 1 to 3, characterized in that the nozzle (94) is arranged centrally in a turbulent burner.

14. Device as set forth in Claim 13, characterized in that

(a) the turbulent burner has an inner jacket (100) and an outer jacket (96), with the oxidizing agent and fuel gas being coaxially guided through the interspaces formed by the inner and outer jackets and the gases being mixed outside the turbulent burner, and

(b) a capillary tube (110) carrying the nozzle (94) at its end is guided in the interior of the inner jacket.

Fig.1

Fig.2

1

Fig. 4

Fig. 3

Fig.5

Fig.6

Fig.7

Fig.8